# EUROPEAN PATENT APPLICATION

(11) **EP 4 160 748 A1**
(43) Date of publication of application: **05.04.2023**
(21) Application number: 21942218.5
(22) Date of filing: 25.05.2021
(51) Int. Cl.: H01M 4/62

(54) **SECONDARY BATTERY, PREPARATION METHOD THEREFOR, DEVICE COMPRISING SAME, AND BINDER FORMULATION**

(71) Applicant: Contemporary Amperex Technology Co., Limited, Fujian PRC 352100 (CN)
(72) Inventor: HUANG, Yuping, Ningde, Fujian 352100 (CN); MA, Yunjian, Ningde, Fujian 352100 (CN)
(74) Representative: Gong, Jinping
(86) International application number: PCT/CN2021/095687
(87) International publication number: WO 2022/246630

(57) **Abstract**

This application provides a secondary battery, a preparation method thereof, an apparatus containing the same, and a binder formula. The secondary battery includes a negative electrode plate. The negative electrode plate includes a binder. The binder includes a polymer obtained by crosslinking in a binder composition. The binder composition includes a first organic binder A, a second organic binder B, and an inorganic binder C. The first organic binder A has more than two hydroxyl groups. The second organic binder B has more than two -C(O)R, where R independently represents -OX or -NH₂, and X independently represents hydrogen or alkali metal ion. The inorganic binder C includes one or more of silicate, borate, and phosphate.

## Description

### TECHNICAL FIELD

This application relates to the field of secondary battery technologies, and specifically, to a secondary battery, a preparation method thereof, an apparatus containing the same, and a binder formula.

### BACKGROUND

In recent years, with continuous development of various electronic products, new energy vehicles, and energy storage apparatuses, the demand for secondary batteries has also increased rapidly. The secondary battery is charged and discharged through repeated intercalation and deintercalation of active ions between positive-electrode active materials and negative-electrode active materials. The positive-electrode and negative-electrode active materials are usually bonded to a current collector by using a binder, so as to output electric energy and help the secondary battery to obtain high energy density. As an important part of an electrode, the binder has a huge impact on electrochemical performance of the secondary battery, especially cycling performance, and further affects operating performance and efficiency of an apparatus using the secondary battery. However, how to improve the binder to make the secondary battery have both relatively high energy density and better cycling performance is a technical problem in the field of secondary battery research and development.

### SUMMARY

This application provides a secondary battery, including a negative electrode plate. The negative electrode plate includes a binder. The binder includes a polymer obtained by crosslinking in a binder composition. The binder composition includes a first organic binder A, a second organic binder B, and an inorganic binder C. The first organic binder A has more than two hydroxyl groups. The second organic binder B has more than two -C(O)R, where R independently represents -OX or -NH₂, and X independently represents hydrogen or alkali metal ion. The inorganic binder C includes one or more of silicate, borate, and phosphate.

In the secondary battery provided in this application, the binder composition can form an organic/inorganic composite polymer with a network crosslinking structure through crosslinking reaction. The polymer enhances the interaction between particles in a negative-electrode film layer, and between the negative-electrode film layer and a negative-electrode current collector, so that the negative electrode plate has a relatively high bonding force and a relatively high cohesion force. The negative electrode plate remains stable during cycling and storage of the battery. Especially, problems of rebound and swelling during a cold pressing process and a battery charge and discharge cycle are effectively alleviated. Therefore, cycling performance of the battery can be significantly improved.

The organic/inorganic composite polymer with a network crosslinking structure also has good high-temperature resistance. A binder containing such polymer can maintain relatively high adhesion and stability in the high-temperature environment, which allows the negative electrode plate to maintain a relatively high cohesion force and a relatively high bonding force in the high-temperature cycling or high-temperature storage process, thereby improving the high-temperature cycling performance and high-temperature storage performance of the battery.

In any one implementation of this application, the polymer includes a first condensation unit between a -C(O)R and a hydroxyl group, an inorganic polymerization unit, and a second condensation unit between the inorganic polymerization unit and -C(O)R, where the inorganic polymerization unit includes one or more of a polysiloxane unit, a polyboroxide unit, and a polyphosphate oxygen unit. The polymer may have a good network crosslinking structure and high-temperature resistance. Use of such polymer can effectively improve the bonding force, cohesion force, and high-temperature resistance of the negative electrode plate, thereby further improving the high-temperature cycling performance and high-temperature storage performance of the battery.

In any one implementation of this application, the first organic binder A includes a side hydroxyl group and/or a terminal hydroxyl group. In some embodiments, the first organic binder A includes one or more structure segments shown in A1, A2, and A3, where

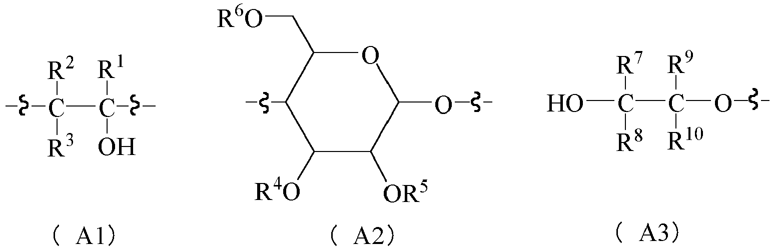

R¹, R², R³, R⁷, R⁸, R⁹, and R¹⁰ each independently represent hydrogen, OH, or C1-C8 alkyl group, R⁴, R⁵, and R⁶ each independently represent hydrogen or CH₂COOY, Y independently represents hydrogen or alkali metal ion, and one or more of R⁴, R⁵, and R⁶ represent hydrogen.

In any one implementation of this application, the first organic binder A is selected from one or more of polyvinyl alcohol, sodium carboxymethyl cellulose, polyethylene oxide, and polyethylene glycol.

Appropriate use of the first organic binder A can further improve the cohesion force of the negative electrode plate, thereby helping the battery to obtain a relatively low cycling swelling force and relatively high cycling performance.

In any one implementation of this application, the second organic binder B includes one or more structure segments shown in B1, B2, B3, B4, B5, and B6, where

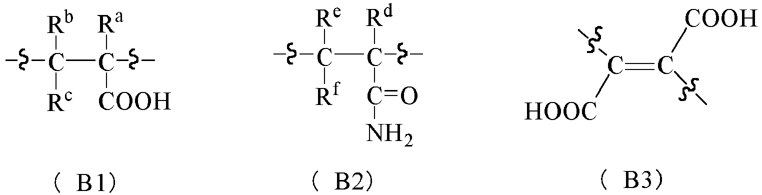

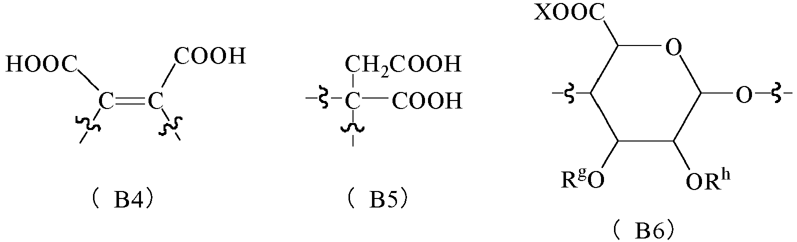

R^{a}, R^{b}, R^{c}, R^{d}, R^{e}, R^{f}, R^{g}, and R^{h} each independently represent hydrogen or C1-C8 alkyl group.

In any one implementation of this application, the second organic binder B is selected from one or more of polyacrylic acid, polyacrylamide, fumaric acid, maleic acid, citric acid, and sodium alginate.

Appropriate use of the second organic binder B can further improve the cohesion force of the negative electrode plate, thereby helping the battery to obtain a relatively low cycling swelling force and relatively high cycling performance.

In any one implementation of this application, the silicate may be selected from one or more of lithium silicate, sodium silicate, potassium silicate, magnesium silicate, calcium silicate, aluminum silicate, and sodium aluminum silicate. The borate may be selected from one or more of lithium borate, sodium borate, potassium borate, zinc borate, magnesium borate, and calcium borate. The phosphate may be selected from one or more of lithium phosphate, sodium phosphate, potassium phosphate, zinc phosphate, magnesium phosphate, calcium phosphate, aluminum phosphate, and aluminum dihydrogen phosphate. Appropriate use of the inorganic binder C helps the binder to achieve relatively high adhesion, high-temperature resistance, and flexibility. Therefore, a battery using such binder can have a relatively low cycling swelling force, and relatively high ambient-temperature cycling performance, high-temperature cycling performance, and high-temperature storage performance.

In any one implementation of this application, based on a total weight of the first organic binder A, the second organic binder B, and the inorganic binder C, content of the first organic binder A is 10%-49%, and optionally 15%-35%. An appropriate proportion of the first organic binder A helps improve the adhesion of the binder. Therefore, a battery using such binder can have a relatively low cycling swelling force, and relatively high ambient-temperature cycling performance, high-temperature cycling performance, and high-temperature storage performance.

In any one implementation of this application, based on the total weight of the first organic binder A, the second organic binder B, and the inorganic binder C, content of the second organic binder B is 50%-89%, and optionally 60%-80%. An appropriate proportion of the second organic binder B helps improve the adhesion of the binder. Therefore, a battery using such binder can have a relatively low cycling swelling force, and relatively high ambient-temperature cycling performance, high-temperature cycling performance, and high-temperature storage performance.

In any one implementation of this application, based on the total weight of the first organic binder A, the second organic binder B, and the inorganic binder C, content of the inorganic binder C is 0.5%-10%, optionally 1%-5%, and further optionally 1%-2%. An appropriate proportion of the inorganic binder C allows the binder to have good high-temperature resistance and high adhesion and flexibility at the same time. Therefore, a battery using such binder can have a relatively low cycling swelling force, and relatively high ambient-temperature cycling performance, high-temperature cycling performance, and high-temperature storage performance.

In any one implementation of this application, a weight ratio of the first organic binder A to the second organic binder B is 0.9:1-1:9, and optionally 0.98:1-1:4. A weight ratio of the first organic binder A to the second organic binder B within an appropriate range can further improve the adhesion and high-temperature resistance of the binder. Therefore, a battery using such binder can have a relatively low cycling swelling force, and relatively high ambient-temperature cycling performance, high-temperature cycling performance, and high-temperature storage performance.

In any one implementation of this application, the binder further includes styrene-butadiene rubber. Such binder enables the negative-electrode film layer and negative electrode plate to have both appropriate strength and flexibility, thereby obtaining relatively good processing performance and reducing the risk of damage such as cracking of the negative-electrode film layer.

In any one implementation of this application, a weight ratio of the binder composition to the styrene-butadiene rubber is 1:1-1:2, and optionally 1:1-1:1.5. Such binder not only enables the negative electrode plate to have relatively high adhesion, but also enables the negative-electrode film layer and the negative electrode plate to have both appropriate strength and flexibility, thereby obtaining better processing performance and reducing the risk of damage such as cracking of the negative-electrode film layer.

A second aspect of this application provides an apparatus, where the apparatus includes the secondary battery according to this application. The apparatus uses the secondary battery in this application. Therefore, the apparatus can have the same beneficial effects as the secondary battery.

A third aspect of this application provides a preparation method of secondary battery, including steps of preparing a negative electrode plate by using the following method:
forming an initial negative-electrode film layer on a surface of a negative-electrode current collector, where the initial negative-electrode film layer includes a first organic binder A, a second organic binder B, and an inorganic binder C; the first organic binder A has more than two hydroxyl groups; the second organic binder B has more than two -C(O)R, where R independently represents -OX or -NH₂, and X independently represents hydrogen or alkali metal ion; and the inorganic binder C includes one or more of silicate, borate, and phosphate; and
triggering a crosslinking reaction between the first organic binder A, the second organic binder B, and the inorganic binder C in the initial negative-electrode film layer to form a negative-electrode film layer, so as to obtain a negative electrode plate.

In any one implementation of this application, the step of forming an initial negative-electrode film layer on a surface of a negative-electrode current collector includes:
dispersing a negative-electrode active material, a conductive agent, the first organic binder A, the second organic binder B, and the inorganic binder C in a solvent to prepare a negative electrode slurry; and
applying the negative-electrode slurry on the surface of the negative-electrode current collector, followed by drying, to form the initial negative-electrode film layer.

In any one implementation of this application, temperature of the crosslinking reaction is ≥ 150°C, optionally 150°C-290°C, or further optionally 150°C-200°C.

In any one implementation of this application, the negative electrode slurry further includes styrene-butadiene rubber.

A fourth aspect of this application provides a binder formula. The binder formula includes a first organic binder A, a second organic binder B, and an inorganic binder C. The first organic binder A has more than two hydroxyl groups, the second organic binder B has more than two -C(O)R, where R independently represents -OX or -NH₂, and X independently represents hydrogen or alkali metal ion, and the inorganic binder C includes one or more of silicate, borate, and phosphate.

In any one implementation of this application, the binder formula further includes styrene-butadiene rubber.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic diagram of a structure segment of a binder composition after crosslinking.
FIG. 2 is a schematic diagram of an implementation of a secondary battery.
FIG. 3 is an exploded view of FIG. 2.
FIG. 4 is a schematic diagram of an implementation of a battery module.
FIG. 5 is a schematic diagram of an implementation of a battery pack.
FIG. 6 is an exploded view of FIG. 5.
FIG. 7 is a schematic diagram of an implementation of an apparatus using a secondary battery as a power source.
FIG. 8 is an infrared spectrogram of binders of comparative examples 1 to 4 and example 1.

### DESCRIPTION OF EMBODIMENTS

To make the objectives, technical solutions, and beneficial technical effects of this application clearer, this application is further described below in detail with reference to embodiments. It should be understood that the embodiments described in this specification are merely intended to interpret this application, but not intended to limit this application.

For simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual value between endpoints of a range is included in the range. Therefore, each point or individual value may be used as its own lower limit or upper limit to be combined with any other point or individual value or combined with any other lower limit or upper limit to form a range not expressly recorded.

In the description of this specification, it should be noted that, unless otherwise stated, "more than" and "less than" a number mean inclusion of the number itself, "several (a plurality of) types" means two types or more than two types, and "several (a plurality of)" means two or more than two.

The foregoing invention content of this application is not intended to describe each of the disclosed embodiments or implementations of this application. The following description illustrates exemplary embodiments in detail by using examples. Throughout this application, guidance is provided by using a series of embodiments and the embodiments may be used in various combinations. In the examples, enumeration is only representative but should not be interpreted as exhaustive.

In any one example of this application, the term "C1-C8 alkyl group" represents an alkyl group containing 1-8 carbon atoms. Examples of C1-C8 alkyl group may include methyl group, ethyl group, n-propyl group, isopropyl group, n-butyl group, isobutyl group, sec-butyl group, t-butyl group, n-amyl group, isoamyl group, n-hexyl group, n-heptyl group, n-octyl group, and the like. One or more hydrogens in the C1-C8 alkyl group may further be substituted by other elements or groups. The other elements may be, but are not limited to, F, Cl, O, and the like. The other groups may be, but are not limited to, hydroxyl group, amino group, phenyl group, methoxy group, and the like.

### Secondary battery

Secondary battery, also known as rechargeable battery or storage battery, is a battery that can be charged after being discharged to activate active materials for continuous use.

Typically, the secondary battery includes a positive electrode plate, a negative electrode plate, a separator, and an electrolyte. In the charging and discharging process of a battery, active ions are intercalated and deintercalated between the positive electrode plate and the negative electrode plate. The separator is disposed between the positive electrode plate and the negative electrode plate to prevent short circuit of the positive electrode and negative electrode and to allow the ions to pass through. The electrolyte is between the positive electrode plate and the negative electrode plate to transport ions.

### [Negative electrode plate]

This application provides a negative electrode plate. The negative electrode plate includes a negative-electrode current collector and a negative-electrode film layer disposed on at least one surface of the negative-electrode current collector. For example, the negative-electrode current collector has two opposite surfaces in a thickness direction of the negative-electrode current collector, and the negative-electrode film layers are stacked on either or both of the two opposite surfaces of the negative-electrode current collector.

The negative-electrode current collector may be made of a material with good conductivity and strength. For example, the negative-electrode current collector may be a metal foil or a composite current collector (the composite current collector may be formed by disposing a metal material on a polymer matrix). In some embodiments, the negative-electrode current collector may be a copper foil.

The negative-electrode film layer includes a negative-electrode active material. The negative-electrode active material is not limited to any particular type in this application, and may be selected based on an actual need. In some embodiments, the negative-electrode active material may include one or more of graphite material (for example, artificial graphite or natural graphite), silicon-based material (for example, elemental silicon, silicon-oxygen compound, silicon-carbon composite, silicon-nitrogen compound, or silicon alloy), tin-based material (for example, elemental tin, tin-oxygen compound, or tin alloy), mesocarbon microbeads (MCMB for short), hard carbon, soft carbon, lithium titanate, and other metals that can form alloys with active ions.

The negative-electrode film layer further includes a binder, which is mainly used to bind negative-electrode active materials and optional conductive agents. In the negative electrode plate provided in this application, the binder includes a polymer obtained by crosslinking in a binder composition. The binder composition includes a first organic binder A, a second organic binder B, and an inorganic binder C. The first organic binder A has more than two hydroxyl groups. The second organic binder B has more than two -C(O)R, where R independently represents -OX or -NH₂, and X independently represents hydrogen or alkali metal ion. The inorganic binder C includes one or more of silicate, borate, and phosphate.

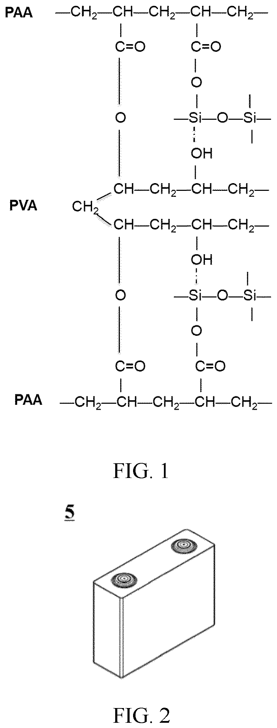

In the binder composition, a condensation reaction may occur between the hydroxyl group of the first organic binder A and -C(O)R of the second organic binder B to form a first condensation unit. In addition, the inorganic binder C can polymerize to form an inorganic polymerization structure with a plurality of hydroxyl groups. In addition, a condensation reaction occurs between the hydroxyl groups of the inorganic polymerization structure and - C(O)R of the second organic binder B to form a second condensation unit. FIG. 1 is shows a crosslinking structure of a binder composition. As shown in FIG. 1, the binder composition can form a polymer with a good network crosslinking structure through crosslinking reaction.

The polymer formed by chemical reaction of the binder composition contains the crosslinked first organic binder A and second organic binder B, so that the polymer has relatively high bonding performance, allowing for a large bonding force between particles (for example, a negative-electrode active material and an optional conductive agent) in the negative-electrode film layer, and between the negative-electrode film layer and the negative-electrode current collector. In addition, the polymer has a network crosslinking structure, allowing for a stronger interaction between the particles in the negative-electrode film layer. Therefore, use of a binder containing a crosslinking polymer of the binder composition allows the negative electrode plate to have a large bonding force, and also increases the cohesion force of the negative-electrode film layer. The negative electrode plate is not prone to film or coating falling during battery cycling and storage. Especially, problems of rebound and swelling of the negative electrode plate during cold pressing and battery charge-discharge cycling are effectively alleviated. Therefore, cycling swelling force of the battery can be effectively reduced, and cycling performance of the battery can be significantly improved. In addition, the volume change of the battery is reduced, and energy density and safety performance of the battery can also be improved.

The binder composition forms a polymer with a network crosslinking structure through crosslinking, so that the polymer has good high-temperature resistance. An inorganic polymerization unit is also introduced into the polymer through crosslinking reaction, which can further improve the high-temperature resistance of the binder. Therefore, a binder containing such polymer can maintain relatively high adhesion and stability in the high-temperature environment, which allows the negative electrode plate to maintain a relatively high cohesion force and a relatively high bonding force in the high-temperature cycling or high-temperature storage process, thereby improving the high-temperature cycling performance and high-temperature storage performance of the battery. Examples of the inorganic polymerization unit include one or more of a polysiloxane unit generated by silicate polymerization, a boroxide unit generated by borate polymerization, and a polyphosphate unit generated by phosphate polymerization.

In some embodiments, the first organic binder A may include a side hydroxyl group and/or a terminal hydroxyl group. In some embodiments, the first organic binder A may include one or more of structure segments shown in A1, A2, and A3.

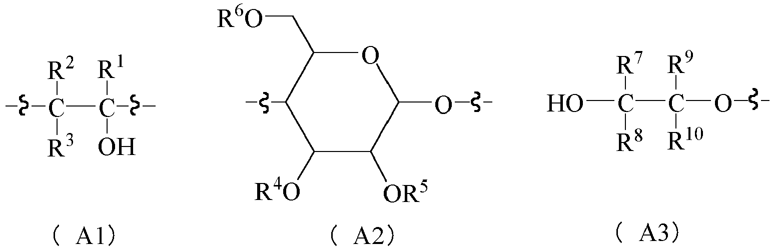

In A1, R¹, R², and R³ each independently represent hydrogen, OH, or C1-C8 alkyl group. In some embodiments, R¹ may be selected from hydrogen or C1-C8 alkyl group, optionally from hydrogen or C1-C4 alkyl group, still optionally from hydrogen, methyl group, or ethyl group, and further optionally from hydrogen. In some embodiments, R² may be selected from hydrogen or C1-C8 alkyl group, optionally from hydrogen or C1-C4 alkyl group, still optionally from hydrogen, methyl group, or ethyl group, and further optionally from hydrogen. In some embodiments, R³ may be selected from hydrogen or C1-C8 alkyl group, optionally from hydrogen or C1-C4 alkyl group, still optionally from hydrogen, methyl group, or ethyl group, and further optionally from hydrogen.

In A2, R⁴, R⁵, and R⁶ each independently represent hydrogen or CH₂COOY, where Y independently represents hydrogen or alkali metal ion. One or more of R⁴, R⁵, and R⁶ represent hydrogen. The alkali metal may be selected from lithium, sodium, or potassium, for example, sodium. In some embodiments, R⁴, R⁵, and R⁶ each independently represent hydrogen or CH₂COONa. In some embodiments, R⁴ represents hydrogen. In some embodiments, R⁵ represents hydrogen. In some embodiments, R⁶ represents CH₂COONa.

In A3, R⁷, R⁸, R⁹, and R¹⁰ each independently represent hydrogen, OH, or C1-C8 alkyl group. In some embodiments, R⁷ may be selected from hydrogen or C1-C8 alkyl group, optionally from hydrogen or C1-C4 alkyl group, still optionally from hydrogen, methyl group, or ethyl group, and further optionally from hydrogen. In some embodiments, R⁸ may be selected from hydrogen or C1-C8 alkyl group, optionally from hydrogen or C1-C4 alkyl group, still optionally from hydrogen, methyl group, or ethyl group, and further optionally from hydrogen. In some embodiments, R⁹ may be selected from hydrogen or C1-C8 alkyl group, optionally from hydrogen or C1-C4 alkyl group, still optionally from hydrogen, methyl group, or ethyl group, and further optionally from hydrogen. In some embodiments, R¹⁰ may be selected from hydrogen or C1-C8 alkyl group, optionally from hydrogen or C1-C4 alkyl group, still optionally from hydrogen, methyl group, or ethyl group, and further optionally from hydrogen.

In some embodiments, the first organic binder A may include one or more of structure segments shown in A1 and A2. In some embodiments, the first organic binder A may include a plurality of A1s and/or a plurality of A2s.

In some embodiments, the structure segment shown in A1 is a structural unit in the first organic binder A. The first organic binder A may include a plurality of A1 structural units. In some embodiments, the structure segment shown in A2 is a structural unit in the first organic binder A. The first organic binder A may include a plurality of A2 structural units.

In some embodiments, optionally, the first organic binder A may include 100-2,000, 300-1,500, 400-1,000, or 500-900 A1s.

In some embodiments, optionally, the first organic binder A may include 100-5,000, 300-4,000, 1,000-4,000, or 2,000-3,500 A2s.

The first organic binder A contains a plurality of hydroxyl groups, which can increase crosslinking sites, so as to improve the crosslinking degree of the crosslinking polymer, improve the network crosslinking structure, and further improve the cohesion force of the negative electrode plate. Therefore, the swelling force of the negative electrode plate is reduced during the battery cycling, so that the battery can obtain a relatively low cycling swelling force and relatively high cycling performance.

Further, the first organic binder A has a plurality of hydroxyl groups, and the interaction between the inorganic polymerization unit and the hydroxyl group of the first organic binder A is likely to exist in the crosslinking polymer. In this way, an interaction force between the binder and the particles in the negative-electrode film layer is enhanced, so as to further improve the cohesion force of the negative electrode plate. Examples of the interaction may include hydrogen bond, ionic bond, or electrostatic interaction.

In some embodiments, the first organic binder A may be a polymer. Optionally, the first organic binder A is selected from one or more of polyvinyl alcohol (PVA), sodium carboxymethyl cellulose (CMC-Na), polyethylene oxide (PEO), and polyethylene glycol (PEG). In some embodiments, the first organic binder A is selected from one or more of polyvinyl alcohol (PVA) and sodium carboxymethyl cellulose (CMC-Na).

Optionally, a weight-average molecular weight of polyvinyl alcohol is 16,000-67,000, and further optionally 20,000-40,000, or the like. A weight-average molecular weight of sodium carboxymethyl cellulose is optionally 90,000-1,000,000, and further optionally 500,000-900,000, or the like. An appropriate molecular weight of the first organic binder A helps improve the processing and coating performance of a negative electrode slurry, and makes the binder have relatively good bonding performance.

In some embodiments, the second organic binder B may include one or more of structure segments shown in B1, B2, B3, B4, B5, and B6.

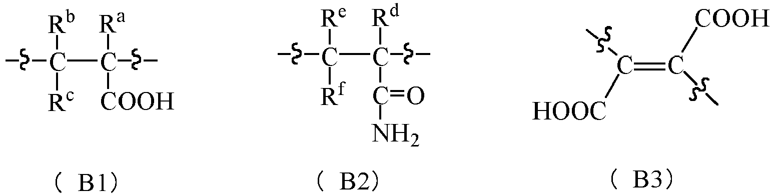

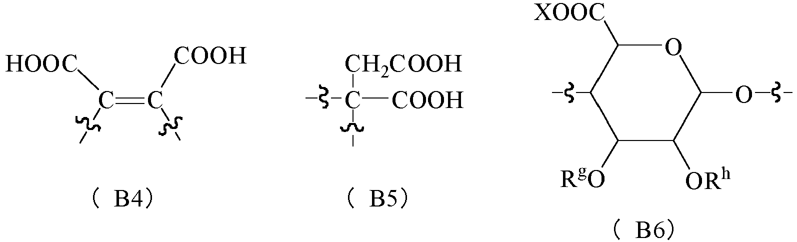

R^{a}, R^{b}, R^{c}, R^{d}, R^{e}, R^{f}, R^{g}, and R^{h} each independently represent hydrogen or C1-C8 alkyl group.

In B1, R^{a}, R^{b}, and R^{c} each independently represent hydrogen or C1-C8 alkyl group. In some embodiments, R^{a} may be selected from hydrogen or C1-C4 alkyl group, optionally from hydrogen, methyl group, or ethyl group, and further optionally from hydrogen. In some embodiments, R^{b} may be selected from hydrogen or C1-C4 alkyl group, optionally from hydrogen, methyl group, or ethyl group, and further optionally from hydrogen. In some embodiments, R^{c} may be selected from hydrogen or C1-C4 alkyl group, optionally from hydrogen, methyl group, or ethyl group, and further optionally from hydrogen.

In B2, R^{d}, R^{e}, and R^{f} each independently represent hydrogen or C1-C8 alkyl group. In some embodiments, R^{d} may be selected from hydrogen or C1-C4 alkyl group, optionally from hydrogen, methyl group, or ethyl group, and further optionally from hydrogen. In some embodiments, R^{e} may be selected from hydrogen or C1-C4 alkyl group, optionally from hydrogen, methyl group, or ethyl group, and further optionally from hydrogen. In some embodiments, R^{f} may be selected from hydrogen or C1-C4 alkyl group, optionally from hydrogen, methyl group, or ethyl group, and further optionally from hydrogen.

In some embodiments, further examples of B5 may be selected from one or more of B51 and B52.

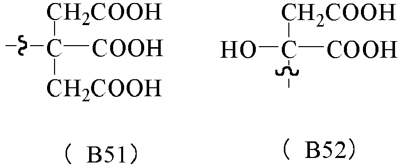

In B6, X independently represents hydrogen or alkali metal ion. Examples of the alkali metal include lithium, sodium, or potassium. In some embodiments, X represents hydrogen or sodium ion. In some embodiments, X represents sodium ion.

In B6, R^{g} and R^{h} each independently represent hydrogen or C1-C8 alkyl group. In some embodiments, R^{g} may be selected from hydrogen or C1-C4 alkyl group, optionally from hydrogen, methyl group, or ethyl group, and further optionally from hydrogen. In some embodiments, R^{h} may be selected from hydrogen or C1-C4 alkyl group, optionally from hydrogen, methyl group, or ethyl group, and further optionally from hydrogen.

In some embodiments, the second organic binder B may include one or more of structure segments shown in B1, B2, and B6. The second organic binder B includes a plurality of structure segments shown in B1, B2, and/or B6.

In some embodiments, the structure segments shown in B1, B2, and/or B6 are structural units in the second organic binder B. In some embodiments, the second organic binder B may include a plurality of B1 structural units, a plurality of B2 structural units, and/or a plurality of B6 structural units.

In some embodiments, the second organic binder B may include 20-6,500, 100-6,000, 500-5,000, or 700-3,000 B1s.

In some embodiments, the second organic binder B may include 10,000 to 200,000, 20,000 to 100,000, 30,000 to 70,000, or 40,000 to 60,000 B2s.

In some embodiments, the second organic binder B may include 1-300, 2-250, 5-200, 10-150, or 20-100 B2s.

The second organic binder B contains a plurality of -C(O)R, which can increase crosslinking sites, so as to improve the network crosslinking structure, and further improve the cohesion force of the negative electrode plate. Therefore, the swelling force of the negative electrode plate is reduced during the battery cycling, so that the battery can obtain a relatively low cycling swelling force and relatively high cycling performance.

In some embodiments, the second organic binder B is selected from one or more of polyacrylic acid (PAA), polyacrylamide (PAM), fumaric acid (FA), maleic acid (MA), citric acid (CA), and sodium alginate (SA). Optionally, the second organic binder B is selected from one or more of polyacrylic acid (PAA), polyacrylamide (PAM), and sodium alginate (SA).

A weight-average molecular weight of polyacrylic acid is optionally 2,000-450,000, and further optionally 50,000-200,000, or the like. A weight-average molecular weight of polyacrylamide is 2,000,000-14,000,000, and further optionally 2,500,000-5,000,000, or the like. An average molecular weight of sodium alginate is optionally 500-50,000, and further optionally 2,000-40,000, 3,000-30,000, 20,000-40,000, or the like. An appropriate molecular weight helps the binder to obtain relatively high bonding performance.

In some embodiments, the silicate may be selected from one or more of lithium silicate, sodium silicate, potassium silicate, magnesium silicate, calcium silicate, aluminum silicate, and sodium aluminium silicate. The borate may be selected from one or more of lithium borate, sodium borate, potassium borate, zinc borate, magnesium borate, and calcium borate. The phosphate may be selected from one or more of lithium phosphate, sodium phosphate, potassium phosphate, zinc phosphate, magnesium phosphate, calcium phosphate, aluminum phosphate, and aluminum dihydrogen phosphate. In some embodiments, the inorganic binder C may include one or more of sodium silicate, sodium borate, sodium phosphate, and aluminum dihydrogen phosphate.

In some embodiments, based on a total weight of the first organic binder A, the second organic binder B, and the inorganic binder C, content of the first organic binder A is 10%-49%, and optionally 15%-40%, 15%-35%, 15%-25%, 20%-30%, 25%-45%, 30%-49%, 40%-49%, or the like. An appropriate proportion of the first organic binder A can provide an appropriate number of crosslinking sites, so as to improve the network crosslinking structure and help improve the adhesion of the binder.

In some embodiments, based on the total weight of the first organic binder A, the second organic binder B, and the inorganic binder C, content of the second organic binder B is 50%-89%, and optionally 50%-80%, 60%-80%, 65%-80%, 70%-85%, 60%-75%, 50%-65%, or the like. An appropriate proportion of the second organic binder B can provide an appropriate number of crosslinking sites, so as to improve the network crosslinking structure and help improve the adhesion of the binder.

In some embodiments, a weight ratio of the first organic binder A to the second organic binder B is 0.9:1-1:9, and optionally 0.98:1-1:4. A weight ratio of the first organic binder A to the second organic binder B within an appropriate range can make the polymer have relatively high crosslinking degree, to further improve the network crosslinking structure and improve the adhesion and high-temperature resistance of the binder.

In some embodiments, based on the total weight of the first organic binder A, the second organic binder B, and the inorganic binder C, content of the inorganic binder C is 0.5%-10%, and optionally 0.5%-5%, 1%-5%, 0.5%-3%, 1%-3%, 1%-2%, 0.8%-1.5%, or the like. An appropriate proportion of the inorganic binder C allows the binder to have good high-temperature resistance and high adhesion and flexibility at the same time.

In some embodiments, the first organic binder A is PVA, the second organic binder B is PAA, and the inorganic binder C is sodium silicate. Further, based on the total weight of the first organic binder A, the second organic binder B, and the inorganic binder C, the content of the first organic binder A is 10%-49%, the content of the second organic binder B is 50%-89%, and the content of the inorganic binder C is 1%-5%; optionally, the content of the first organic binder A is 18%-35%, the content of the second organic binder B is 62%-80%, and the content of the inorganic binder C is 1%-3%; and further optionally, the content of the first organic binder A is 20%-30%, the content of the second organic binder B is 69%-79%, and the content of the inorganic binder C is 1%-2%.

In some embodiments, the first organic binder A is PVA, the second organic binder B is SA, and the inorganic binder C is sodium silicate. Further, based on the total weight of the first organic binder A, the second organic binder B, and the inorganic binder C, the content of the first organic binder A is 30%-49%, the content of the second organic binder B is 50%-65%, and the content of the inorganic binder C is 1%-5%; and optionally, the content of the first organic binder A is 40%-49%, the content of the second organic binder B is 50%-59%, and the content of the inorganic binder C is 1%-2%.

In some embodiments, the binder further includes other binders that can be used for negative electrode plates. In some embodiments, the binder further includes styrene-butadiene rubber (SBR). Use of the binder composition and styrene-butadiene rubber can obtain relatively high bonding performance, and also allow the negative-electrode film layer and the negative electrode plate to have both appropriate strength and flexibility, so as to obtain relatively good processing performance and reduce the risk of damage such as cracking of the negative-electrode film layer.

Optionally, a weight ratio of the binder composition to the styrene-butadiene rubber is 1:1-1:2, and optionally 1:1-1:1.5.

In some embodiments, a weight percentage of the binder in the negative-electrode film layer is optionally 1%-5%, 2%-4%, 1.5%-3%, 1.2%-2.5%, or the like.

In some embodiments, the negative-electrode film layer further optionally includes a conductive agent. For example, the conductive agent used for the negative-electrode film layer may be selected from one or more of graphite, superconducting carbon, carbon black (for example, acetylene black, Ketjen black, or Super P), carbon dot, carbon nanotube, graphene, and carbon nanofiber.

### [Positive electrode plate]

In the secondary battery in this application, the positive electrode plate includes a positive-electrode current collector and a positive-electrode film layer that is disposed on at least one surface of the positive-electrode current collector and that includes a positive-electrode active material. For example, the positive-electrode current collector has two opposite surfaces in a thickness direction of the negative-electrode current collector, and the positive-electrode film layers are stacked on either or both of the two opposite surfaces of the positive-electrode current collector.

The positive-electrode current collector may be made of a material with good conductivity and strength. For example, the positive-electrode current collector may be a metal foil or a composite current collector (the composite current collector may be formed by disposing a metal material on a polymer matrix). In some embodiments, the positive-electrode current collector may be an aluminum foil.

The positive-electrode active material is not limited to a specific type in this specification. The active materials known in the art that can be used for positive electrodes of secondary batteries can be used, and can be selected by those skilled in the art based on an actual need.

In some embodiments, the secondary battery may be a lithium-ion secondary battery. The positive-electrode active material may be selected from lithium transition metal oxide and modified materials thereof. The modified material may be lithium transition metal oxide being modified through doping and/or coating. For example, the lithium transition metal oxide may be selected from one or more of lithium cobalt oxide, lithium nickel oxide, lithium manganese oxide, lithium nickel manganese oxide, lithium nickel cobalt manganese oxide, lithium nickel cobalt aluminum oxide, and olivine-structured li-containing phosphate.

For example, the positive-electrode active material of the secondary battery may be selected from one or more of LiCoO₂, LiNiO₂, LiMnO₂, LiMn₂O₄, LiNi_{1/3}Co_{1/3}Mn_{1/3}O₂ (NCM111), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ (LFP), and LiMnPO₄.

In some embodiments, the positive-electrode film layer further includes a binder. The binder may include a bonding material known in the art that can be used for positive-electrode film layers. For example, the binder may include one or more of polyvinylidene fluoride (PVDF), polytetrafluoroethylene (PTFE), polyvinyl alcohol (PVA), and polyvinyl butyral (PVB).

In some embodiments, the positive-electrode film layer further optionally includes a conductive agent. The conductive agent is not specifically limited to any particular type, and may be selected by those skilled in the art based on an actual need. For example, the conductive agent used for the positive-electrode film layer may include one or more of graphite, superconducting carbon, carbon black (for example, acetylene black, Ketjen black, or Super P), carbon dot, carbon nanotube, graphene, and carbon nanofiber.

### [Electrolyte]

The electrolyte is not specifically limited to any particular type, and may be selected based on a need. For example, the electrolyte may be selected from at least one of a solid electrolyte and a liquid electrolyte (that is, an electrolyte solution).

In some embodiments, the electrolyte is a liquid electrolyte. The electrolyte includes an electrolytic salt and a solvent.

In some embodiments, the electrolyte salt may be selected from one or more of lithium hexafluorophosphate (LiPF₆), lithium tetrafluoroborate (LiBF₄), lithium perchlorate (LiClO₄), lithium Hexafluoroarsenate (LiAsF₆), lithium difluorosulfimide (LiFSI), lithium difluoromethylsulfonimide (LiTFSI), lithium trifluoromethanesulfonate (LiTFS), lithium difluoromethylborate (LiDFOB), lithium oxalate borate (LiBOB), lithium difluorophosphate (LiPO₂F₂), lithium difluorodioxalate phosphate (LiDFOP), and lithium tetrafluorooxalate phosphate (LiTFOP).

In some embodiments, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoro ethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some embodiments, the electrolyte further optionally includes an additive. For example, the additive may include a negative-electrode film-forming additive, or may include a positive-electrode film-forming additive, or may include an additive capable of improving some performance of the battery, for example, an additive for improving overcharge performance of the battery, an additive for improving high-temperature performance of the battery, or an additive for improving low-temperature performance of the battery.

In some embodiments, the electrolyte may alternatively be a solid electrolyte, for example, a polymer electrolyte.

### [Separator]

In some embodiments, the secondary battery may further include a separator. The separator is disposed between the positive electrode plate and the negative electrode plate to provide separation. The separator includes a substrate, and optionally includes a functional coating disposed on at least one surface of the substrate. The functional coating may be used to improve heat resistance, mechanical strength, and the like of the separator. Optionally, the functional coating may further include other functional materials (for example, ceramic particles and other polymers). The separator substrate is not specially limited to any particular type in this application, and may be selected from any well-known substrate that can be used for separators of secondary batteries. In some embodiments, the separator substrate may be a single-layer film or multi-layer composite film that is selected from one or more of glass fiber, non-woven fabric, polyethylene, and polypropylene.

In some embodiments, a positive electrode plate, a negative electrode plate, and a separator may be made into an electrode assembly through winding or lamination. In some embodiments, the electrolyte is a liquid electrolyte. The electrolyte infiltrates the electrode assembly to transport ions.

In some embodiments, the secondary battery may include an outer package. The outer package may be used for the electrode assembly and electrolyte. There may be one or more electrode assemblies in the secondary battery, and the quantity can be adjusted based on a need.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

This application does not impose special limitations on a shape of the secondary battery, and the secondary battery may be cylindrical, rectangular, or of any other shapes. FIG. 2 shows a rectangular secondary battery 5 as an example.

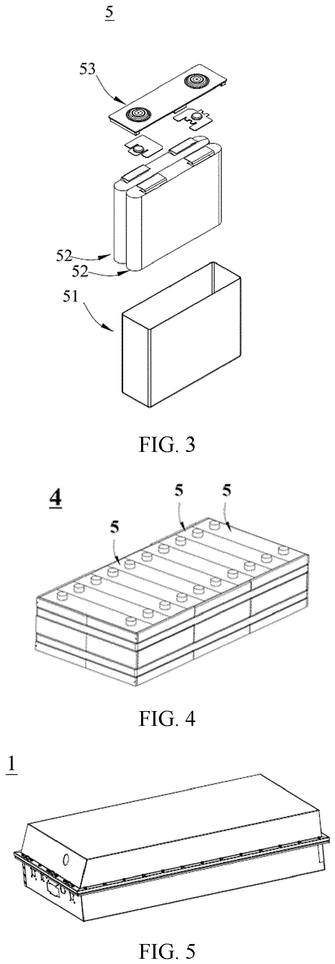

As shown in FIG. 3, the secondary battery 5 includes an outer package and an electrode assembly 52. The outer package may include a housing 51 and a cover plate 53. The housing 51 has an accommodating cavity and an opening communicating with the accommodating cavity. The cover plate 53 is used for covering the opening to close the accommodating cavity. The electrode assembly 52 may be made from a positive electrode plate, a negative electrode plate, and a separator through winding or lamination. The electrode assembly 52 is packaged in the accommodating cavity of the housing 51. The electrolyte infiltrates the electrode assembly 52.

In some embodiments, secondary batteries may be assembled into a battery module. The battery module may include a plurality of secondary batteries, and a specific quantity may be adjusted based on application and capacity of the battery module.

FIG. 4 shows a battery module 4 as an example. As shown in FIG. 4, in the battery module 4, a plurality of secondary batteries 5 may be sequentially arranged along a length direction of the battery module 4. Certainly, the secondary batteries may alternatively be arranged in any other manner. Further, the plurality of secondary batteries 5 may be fastened by using fasteners. The battery module 4 may optionally include a shell with an accommodating space, and the plurality of secondary batteries 5 are accommodated in the accommodating space.

In some embodiments, battery modules may be further assembled into a battery pack, and a quantity of battery modules included in the battery pack may be adjusted based on application and capacity of the battery pack.

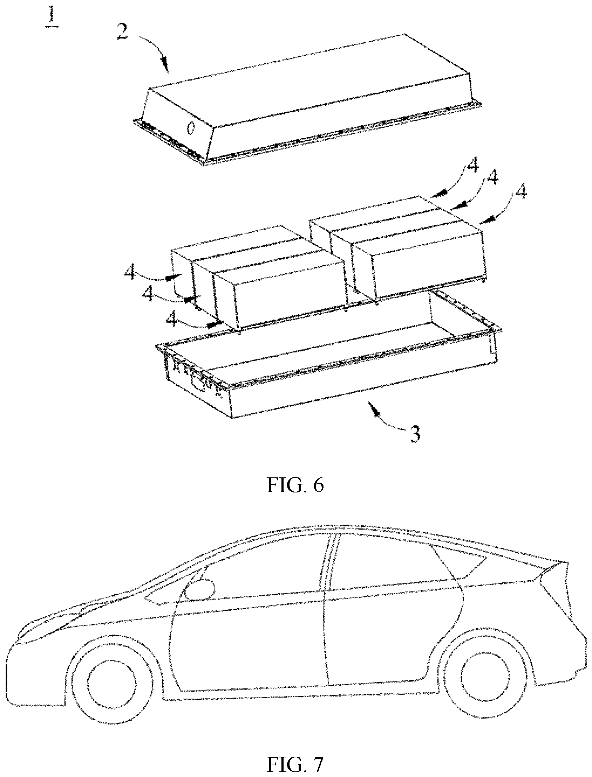

FIG. 5 and FIG. 6 show a battery pack 1 as an example. As shown in FIG. 5 and FIG. 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

### Preparation method

The application provides a preparation method of secondary battery below. The preparation method of secondary battery may include a preparation step of negative electrode plate. In some embodiments, the preparation step of negative electrode plate includes: forming an initial negative-electrode film layer on a surface of a negative-electrode current collector, where the initial negative-electrode film layer includes a first organic binder A, a second organic binder B, and an inorganic binder C; and triggering a crosslinking reaction between the first organic binder A, the second organic binder B, and the inorganic binder C in the initial negative-electrode film layer to form a negative-electrode film layer, so as to obtain a negative electrode plate.

In some embodiments, a negative-electrode active material, a conductive agent, the first organic binder A, the second organic binder B, and the inorganic binder C may be dispersed in a solvent to prepare a negative electrode slurry; and the negative electrode slurry is applied on the surface of the negative-electrode current collector, followed by drying, to form the initial negative-electrode film layer. The solvent may be deionized water.

The negative electrode slurry further optionally contains other binders that can be used for negative electrode plates. In some embodiments, the negative electrode slurry further includes styrene butadiene rubber (SBR). Optionally, a ratio of a total weight of the first organic binder A, the second organic binder B, and the inorganic binder C to a weight of styrene-butadiene rubber is 1:1-1:2, and optionally 1:1-1:1.5.

In the preparation of a negative electrode slurry, the negative-electrode active material, the conductive agent, the first organic binder A, the second organic binder B, the inorganic binder C, other binders such as optional styrene-butadiene rubber, and a solvent can be mixed in the same or different batches to form the negative electrode slurry.

In some embodiments, temperature of drying a negative-electrode slurry coating is optionally 80°C-140°C, and further optionally 80°C-130°C, 80°C-120°C, or 100°C-120°C. For example, the negative-electrode slurry coating can be dried at 90°C-100°C for 1h to 2h, and then dried at 120°C-130°C for 0.5h to 1h.

In some embodiments, a crosslinking reaction may be triggered between the first organic binder A, the second organic binder B, and the inorganic binder C in the initial negative-electrode film layer. Optionally, the temperature of the crosslinking reaction is ≥ 150°C, and further optionally, is 150°C-290°C, 150°C-200°C, 150°C-180°C, or 150°C-170°C. An appropriate crosslinking temperature facilitates a sufficient crosslinking reaction between the first organic binder A, the second organic binder B, and the inorganic binder C to form a good network crosslinking structure.

Except for the preparation method of negative electrode plate in this application, other structures and preparation methods of the secondary battery in this application are well-known. For example, the positive electrode plate in this application may be prepared according to the following method: mixing and dispersing the positive-electrode active material and the optional conductive agent, binder, and others in a solvent (for example, N-methylpyrrolidone NMP), stirring them to a uniform slurry, and applying the slurry on the positive-electrode current collector, followed by drying and cold pressed, to obtain the positive electrode plate.

In some embodiments, the negative electrode plate, the positive electrode plate, the separator, and the electrolyte may be assembled to form a secondary battery. For example, the positive electrode plate, separator, and negative electrode plate may be made into an electrode assembly through winding or lamination; and the electrode assembly is put in the outer package, and the electrolyte is injected, followed by vacuum packaging, standing, formation, shaping, and other processes, to obtain a secondary battery.

The optional solution for the negative electrode plate in this specification is also applicable to the preparation method herein, and constitutes specific implementations of the preparation method. For brevity of this specification, details are not described herein again.

### Apparatus

This application further provides an apparatus. The apparatus includes at least one of the secondary battery, battery module, or battery pack of this application. The secondary battery, the battery module, or the battery pack may be used as a power source for the apparatus, or an energy storage unit of the apparatus. The apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A secondary battery, a battery module, or a battery pack may be selected for the apparatus according to requirements for using the apparatus.

FIG. 7 shows an apparatus as an example. The apparatus is a battery electric vehicle, a hybrid electric vehicle, a plug-in hybrid electric vehicle, or the like. To meet a requirement of the apparatus for high power and high energy density, a battery pack or a battery module may be used.

In another example, the apparatus may be a mobile phone, a tablet computer, a notebook computer, or the like. The apparatus usually needs to be light and thin, and a secondary battery may be used as a power source.

### Binder formula

This application provides a binder formula below. The binder formula includes a binder composition. The binder composition includes a first organic binder A, a second organic binder B, and an inorganic binder C. The first organic binder A has a hydroxyl group. The second organic binder B has more than two -C(O)R, where R independently represents -OX or -NH₂, and X independently represents hydrogen or alkali metal ion. The inorganic binder C includes one or more of silicate, borate, and phosphate.

The binder composition in this application can trigger a condensation reaction between the hydroxyl group of the first organic binder A and -C(O)R of the second organic binder B to form a first condensation unit. In addition, the inorganic binder C can polymerize to form an inorganic polymerization structure with a plurality of hydroxyl groups. In addition, a condensation reaction occurs between the hydroxyl groups of the inorganic polymerization structure and -C(O)R of the second organic binder B to form a second condensation unit. Therefore, the binder composition can form a polymer with a good network crosslinking structure through crosslinking reaction.

The polymer contains the crosslinked first organic binder A and second organic binder B, so that the bonding performance is relatively high. Therefore, when the binder composition is used to bond a first substance and a second substance, a large bonding force can be ensured between the first substance and the second substance. In addition, the polymer has a network crosslinking structure, which can further enhance the interaction between the first substance and the second substance. The first substance and the second substance may be any material, for example, plastic, metal, wood, or inorganic non-metallic material (for example, oxide, carbon, silicon, or inorganic salt). The first substance and the second substance may be of any shape, for example, in a flake, block, or granule shape.

The binder composition forms a polymer with a network crosslinking structure through crosslinking, so that the polymer has good high-temperature resistance. An inorganic polymerization unit is also introduced into the polymer through crosslinking reaction, which can further improve the high-temperature resistance of the binder. Therefore, the binder can maintain high adhesion and stability in the high-temperature environment, so that a good bonding effect can be maintained between the first substance and the second substance in the high-temperature environment.

The binder formula further optionally includes any other well-known binders. In some embodiments, the binder formula further includes styrene butadiene rubber (SBR). Use of the binder formula can obtain a good bonding effect, and also allow bonding structures of the first substance and the second substance to have both appropriate strength and flexibility. Optionally, a ratio of a total weight of the first organic binder A, the second organic binder B, and the inorganic binder C to a weight of styrene-butadiene rubber is 1: 1-1:2, and optionally 1:1-1:1.5.

The optional solutions for the binder composition described in other parts of this specification are also applicable herein. For brevity of this specification, details are not described herein again.

### Examples

The following examples describe in more detail content disclosed in this application. These examples are intended only for illustrative purposes because various modifications and changes made without departing from the scope of the content disclosed in this application are apparent to those skilled in the art. Unless otherwise stated, all parts, percentages, and ratios reported in the following examples are based on weights, all reagents used in the examples are commercially available or synthesized in a conventional manner, and can be used directly without further processing, and all instruments used in the examples are commercially available.

In the following examples and comparative examples, a weight-average molecular weight of PVA is 31,000, a weight-average molecular weight of CMC-Na is 700,000, and a weight-average molecular weight of PAA is 100,000.

### Example 1

### Preparation of negative electrode plate

A negative-electrode active material graphite, conductive carbon black, a first organic binder PVA, a second organic binder PAA, an inorganic binder sodium silicate, and SBR were added into deionized water at a weight ratio of 96.5:1:0.2:0.79:0.01:1.5, and then were stirred to obtain a uniform negative electrode slurry.

The negative electrode slurry was applied on two surfaces of a negative-electrode current collector copper foil, followed by drying at 100°C for 2h, drying at 120°C for 1h, heating at 150°C for 1h, crosslinking reaction, compaction and other processes, to obtain a negative electrode plate.

### Preparation of positive electrode plate

A positive-electrode active material LiNi_{0.5}Co_{0.2}Mn_{0.3}O₂, a conductive agent Super P, and a binder PVDF were thoroughly stirred in a solvent N-methylpyrrolidone (NMP) at a weight ratio of 96.5:1:2.5 to form a positive electrode slurry. Then the positive electrode slurry was applied on two surfaces of a positive electrode current collector aluminum foil, followed by drying and cold pressing, to obtain a positive electrode plate.

### Preparation of electrolyte

EC and DMC were mixed at a weight ratio of 1:1, and then LiPF₆ was uniformly dissolved in the above solution to obtain an electrolyte, where concentration of LiPF₆ is 1 mol/L.

### Separator

A PE separator was used.

### Preparation of secondary battery

The positive electrode plate, the separator, and the negative electrode plate were stacked in order, and were wound to obtain an electrode assembly. The electrode assembly was placed in an outer package, and the electrolyte was injected, followed by packaging, standing, formation, aging, and other processes, to obtain a secondary battery.

Examples 2 to 10: The preparation method was similar to that of example 1, except that the preparation parameters of the negative electrode plate were adjusted. See Table 1 for details.

Comparative example 1: The preparation method was similar to that of example 1, except that in the preparation step of the negative electrode plate, graphite, conductive carbon black, CMC-Na, and SBR were added into deionized water at a weight ratio of 96.5:1:1:1.5, and stirred to obtain a uniform negative electrode slurry.

Comparative example 2: The preparation method was similar to that of example 1, except that in the preparation step of the negative electrode plate, graphite, conductive carbon black, PVA, PAA, and SBR were added into deionized water at a weight ratio of 96.5:1:0.2:0.8:1.5, and stirred to obtain a uniform negative electrode slurry.

Comparative example 3: The preparation method was similar to that of example 1, except that in the preparation step of the negative electrode plate, graphite, conductive carbon black, PVA, PAA, NaOH, and SBR were added into deionized water at a weight ratio of 96.5:1:0.2:0.79:0.01:1.5, and stirred to obtain a uniform negative electrode slurry.

Comparative example 4: The preparation method was similar to that of example 1, except that in the preparation step of the negative electrode plate, heating temperature was 120°C.

### Tests

(1) According to standard GB/T6040-2002 infrared spectrum analysis method, the IS10 Fourier transform infrared spectrometer made by Nicolet (nicolet), USA was used to measure the structural composition of the binders of the examples and comparative examples. The first organic binder A, the second organic binder B, and the inorganic binder C were added into deionized water according to the types and proportions in the above examples and comparative examples. A film was made according to the drying and heating conditions of the examples and comparative examples. The film was used for infrared spectrum analysis test. The test wavenumber ranges from 800 cm⁻¹ to 4,000 cm⁻¹.

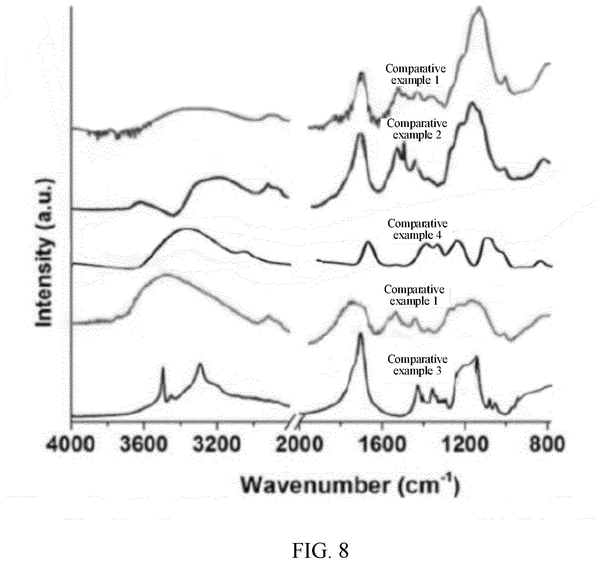

FIG. 8 shows an infrared spectrum of the binders in comparative examples 1 to 4 and example 1. In the figure, in the wavenumber range of 1,700 cm⁻¹-1,750 cm⁻¹ is a characteristic peak with C=O. In example 1, the peak with C=O was a broad peak, indicating that the esterification and polycondensation reaction was more thorough. Compared with example 1, in comparative examples 1 to 4, the peak with C=O shifted to a low wavenumber and had a narrow peak width, indicating that nearly no esterification and polycondensation reaction occurred.

### (2) Ambient-temperature cycling performance of secondary battery

The secondary batteries prepared according to the examples and comparative examples were charged and discharged for the first time at 25°C. The process was as follows: After being left standing at 25°C for 30 min, the secondary battery was charged to 4.35 V at a constant current of 1C, continued to be charged at a constant voltage until the current was ≤ 0.05C, and then discharged to 2.8 V at a constant current of 1C. The discharge capacity C₁ of the first cycle was recorded.

Then, the battery was charged and discharged continuously according to 0.33C₁/1C₁ in the voltage range of 3.3 V to 4.3 V, and discharge capacities during the cycling processes were recorded. Capacity retention rate of the N^{th} cycle = (Discharge capacity of the N^{th} cycle/Discharge capacity of the first cycle) × 100%. The capacity retention rate of the secondary battery after 1,000 cycles at 25°C was tested.

### (3) High-temperature cycling performance of secondary battery

The test method is similar to test (2), except that the test environment temperature was 45°C. The capacity retention rate of the secondary battery after 1,000 cycles at 45°C was tested.

### (4) High-temperature cyclic expansion force of secondary battery

Each of the secondary batteries prepared in the examples and comparative examples was assembled into the steel plate clamp, with the bottom and four sides of the battery attached to the steel plate clamp. Pre-tightening force of the steel plate was adjusted to 2000N. A pressure sensor was placed between the steel plate clamp and the battery, and was connected to a computer. The expansion force of the secondary battery after 1000 cycles at 45°C was measured, in the unit of N. Charging and discharging rules of the battery after 1000 cycles at 45°C were the same as those in test (3).

### (5) High-temperature storage performance of secondary battery

After being left standing for 30 min at 25°C, each of the secondary batteries prepared in the examples and comparative examples was discharged to 2.8 V at a constant current of 1/3C. After being left standing for another 30 min, the secondary battery was charged to 4.35 V at a constant current 1/3C, and continued to be charged at a constant voltage until the current was ≤ 0.05C. After being left standing for 30 min, the battery was discharged to 2.8 V at a constant current of 1/3C. The discharge capacity at this moment was recorded as the initial capacity C₀ of the battery.

After being left standing for 10 min at 25°C, the battery was charged to 4.35 V at the constant current of 1/3C₀, and continued to be charged at a constant voltage until the current was ≤ 0.05C. At this moment, the battery was fully charged, that is, 100% SOC. Then, the battery was left standing for 15 min, and then discharged at a constant current of 1/3C₀, and the state of charge of the battery was adjusted to 97% SOC. Then, the battery was stored at 60°C. The battery was taken out every 15 days, and left standing at 25°C for 30 min, and then discharged to 2.8 V at a constant current of 1/3C₀. After being left standing for another 30 min, the battery was charged at a constant current of 1/3C₀ to 4.35 V, and continued to be charged at a constant voltage until the current was ≤ 0.05C. After being left standing for 30 min, the battery was discharged to 2.8 V at a constant current of 1/3C₀. At this moment, the discharge capacity was capacity Cₙ after one storage cycle. The capacity retention rate of this storage cycle was Cₙ/C₀ × 100%. The storage test process was repeated, and stopped after 90 days of storage. The capacity retention rate after 90 days of storage at 60°C was recorded.

It should be noted that every time the battery was taken out and the capacity was tested, the battery was adjusted to a state of charge of 97% SOC according to the above test process, and then was stored at 60°C.

**Table 1: Preparation parameters**

| Number | Binder composition | | | | Heating temperature (°C) |
|---|---|---|---|---|---|
| | First organic binder A | Second organic binder B | Inorganic binder C or NaOH | Weight ratio A:B:(C or NaOH) | |
| Example 1 | PVA | PAA | Sodium silicate | 0.2:0.79:0.01 | 150 |
| Example 2 | PVA | PAA | Sodium silicate | 0.49:0.5:0.01 | 150 |
| Example 3 | PVA | PAA | Sodium silicate | 0.3:0.69:0.01 | 150 |
| Example 4 | PVA | PAA | Sodium silicate | 0.1:0.89:0.01 | 150 |
| Example 5 | PVA | PAA | Sodium silicate | 0.2:0.78:0.02 | 150 |
| Example 6 | PVA | PAA | Sodium silicate | 0.19:0.76:0.05 | 150 |
| Example 7 | PVA | PAA | Sodium silicate | 0.18:0.72:0.1 | 150 |
| Example 8 | PVA | PAA | Aluminum dihydrogen phosphate | 0.2:0.79:0.01 | 150 |
| Example 9 | PVA | SA | Sodium silicate | 0.49:0.5:0.01 | 150 |
| Example 10 | CMC-Na | CA | Sodium silicate | 0.4:0.59:0.01 | 150 |
| Comparative example 1 | CMC-Na | / | / | / | 150 |
| Comparative example 2 | PVA | PAA | / | 0.2:0.8:0 | 150 |
| Comparative example 3 | PVA | PAA | NaOH | 0.2:0.79:0.01 | 150 |
| Comparative example 4 | PVA | PAA | Sodium silicate | 0.2:0.79:0.01 | 120 |

**Table 2: Battery performance test results**

| Number | Capacity retention rate after 1000 cycles at 25°C | Capacity retention rate after 1000 cycles at 45°C | Expansion force after 1000 cycles at 45°C [N] | Capacity retention rate after storage at 60°C for 90 days |
|---|---|---|---|---|
| Example 1 | 95.3% | 90.5% | 845 | 99.1% |
| Example 2 | 94.9% | 89.8% | 879 | 98.5% |
| Example 3 | 95.1% | 90.0% | 852 | 98.9% |
| Example 4 | 93.6% | 88.9% | 901 | 97.7% |
| Example 5 | 93.2% | 88.7% | 1105 | 96.2% |
| Example 6 | 91.9% | 85.9% | 1031 | 94.5% |
| Example 7 | 91.4% | 85.6% | 1010 | 94.4% |
| Example 8 | 92.6% | 88.6% | 1195 | 95.8% |
| Example 9 | 95.2% | 90.2% | 850 | 99.0% |
| Example 10 | 92.1% | 88.5% | 1225 | 95.2% |
| Comparative example 1 | 91.1% | 85.3% | 1051 | 92.2% |
| Comparative example 2 | 92.2% | 85.6% | 997 | 93.5% |
| Comparative example 3 | 89.7% | 84.4% | 1376 | 91.8% |
| Comparative example 4 | 88.0% | 84.0% | 1520 | 91.2% |

According to Table 2, in the secondary batteries provided in examples 1 to 10 of this application, the negative electrode plate includes an organic/inorganic composite polymer with a network crosslinking structure formed by the cross-linking reaction of the binder composition, which can improve ambient-/high-temperature cycling performance and high-temperature storage performance of the battery, and further reduce a high-temperature cyclic expansion force of the battery.

Compared with example 1, because comparative examples 1 to 4 do not satisfy this application, the ambient-/high-temperature cycling performance and high-temperature storage performance of the battery were low, and the high-temperature cyclic expansion force was relatively large.

The foregoing descriptions are merely specific examples of this application, but are not intended to limit the protection scope of this application. Any equivalent modifications or replacements readily figured out by a person skilled in the art within the technical scope disclosed in this application shall fall within the claimed scope of this application. Therefore, the protection scope of this application shall be subject to the protection scope of the claims.

## Claims

1. A secondary battery, comprising a negative electrode plate, wherein the negative electrode plate comprises a binder, the binder comprises a polymer obtained by crosslinking in a binder composition, and the binder composition comprises a first organic binder A, a second organic binder B, and an inorganic binder C, wherein
the first organic binder A has more than two hydroxyl groups;
the second organic binder B has more than two -C(O)R, wherein R independently represents -OX or -NH₂, and X independently represents hydrogen or alkali metal ion; and
the inorganic binder C comprises one or more of silicate, borate, and phosphate.

2. The secondary battery according to claim 1, wherein the polymer comprises a first condensation unit between -C(O)R and the hydroxyl group, an inorganic polymerization unit, and a second condensation unit between the inorganic polymerization unit and -C(O)R, wherein the inorganic polymerization unit comprises one or more of a polysiloxane unit, a polyboroxide unit, and a polyphosphate oxygen unit.

3. The secondary battery according to claims 1 or 2, wherein the first organic binder A comprises a side hydroxyl group and/or a terminal hydroxyl group; and optionally, the first organic binder A comprises one or more structure segments shown in A1, A2, and A3, 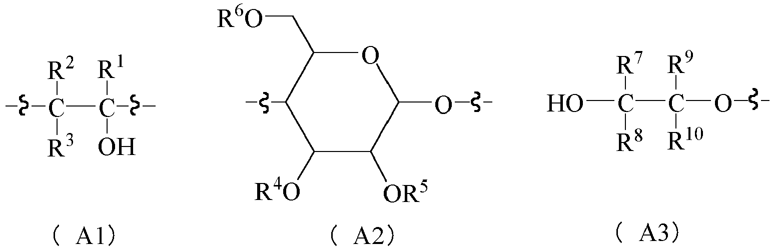 wherein R¹, R², R³, R⁷, R⁸, R⁹, and R¹⁰ each independently represent hydrogen, OH, or C1-C8 alkyl group, R⁴, R⁵, and R⁶ each independently represent hydrogen or CH₂COOY, Y independently represents hydrogen or alkali metal ion, and one or more of R⁴, R⁵, and R⁶ represent hydrogen.

4. The secondary battery according to any one of claims 1 to 3, wherein the first organic binder A is selected from one or more of polyvinyl alcohol, sodium carboxymethyl cellulose, polyethylene oxide, and polyethylene glycol.

5. The secondary battery according to any one of claims 1 to 4, wherein the second organic binder B comprises one or more structure segments shown in B1, B2, B3, B4, B5, and B6, 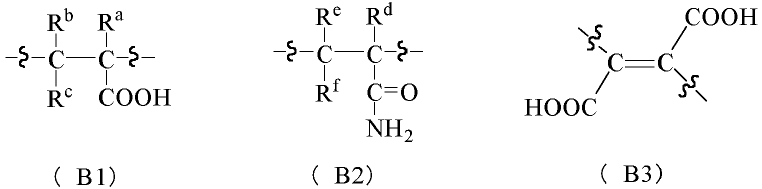 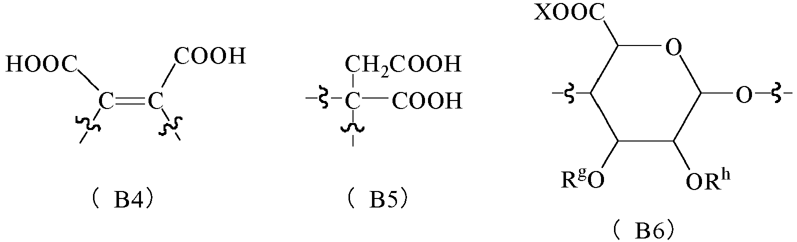 wherein R^{a}, R^{b}, R^{c}, R^{d}, R^{e}, R^{f}, R^{g} and R^{h} each independently represent hydrogen or C1-C8 alkyl group.

6. The secondary battery according to any one of claims 1 to 5, wherein the second organic binder B is selected from one or more of polyacrylic acid, polyacrylamide, fumaric acid, maleic acid, citric acid, and sodium alginate.

7. The secondary battery according to any one of claims 1 to 6, wherein the silicate is selected from one or more of lithium silicate, sodium silicate, potassium silicate, magnesium silicate, a calcium silicate, aluminum silicate, and sodium aluminium silicate;
the borate is selected from one or more of lithium borate, sodium borate, potassium borate, zinc borate, magnesium borate, and calcium borate; and
the phosphate is selected from one or more of lithium phosphate, sodium phosphate, potassium phosphate, zinc phosphate, magnesium phosphate, calcium phosphate, aluminum phosphate, and aluminum dihydrogen phosphate.

8. The secondary battery according to any one of claims 1 to 7, wherein based on a total weight of the first organic binder A, the second organic binder B, and the inorganic binder C, content of the first organic binder A is 10%-49%, and optionally 15%-35%.

9. The secondary battery according to any one of claims 1 to 8, wherein based on the total weight of the first organic binder A, the second organic binder B, and the inorganic binder C, content of the second organic binder B is 50%-89%, and optionally 60%-80%.

10. The secondary battery according to any one of claims 1 to 9, wherein based on the total weight of the first organic binder A, the second organic binder B, and the inorganic binder C, content of the inorganic binder C is 0.5%-10%, optionally 1%-5%, and further optionally 1%-2%.

11. The secondary battery according to any one of claims 1 to 10, wherein a weight ratio of the first organic binder A to the second organic binder B is 0.9:1-1:9, and optionally 0.98:1-1:4.

12. The secondary battery according to any one of claims 1 to 11, wherein the binder further comprises styrene-butadiene rubber.

13. The secondary battery according to claim 12, wherein a weight ratio of the binder composition to the styrene-butadiene rubber is 1:1-1:2, and optionally 1:1-1:1.5.

14. An apparatus, comprising the secondary battery according to any one of claims 1 to 13.

15. A preparation method of secondary battery, comprising steps of preparing a negative electrode plate by using the following method:
forming an initial negative-electrode film layer on a surface of a negative-electrode current collector, wherein the initial negative-electrode film layer comprises a first organic binder A, a second organic binder B, and an inorganic binder C; the first organic binder A has more than two hydroxyl groups; the second organic binder B has more than two -C(O)R, wherein R independently represents -OX or -NH₂, and X independently represents hydrogen or alkali metal ion; and the inorganic binder C comprises one or more of silicate, borate, and phosphate; and
triggering a crosslinking reaction between the first organic binder A, the second organic binder B, and the inorganic binder C in the initial negative-electrode film layer to form a negative-electrode film layer, so as to obtain a negative electrode plate.

16. The preparation method according to claim 15, wherein the step of forming an initial negative-electrode film layer on a surface of a negative-electrode current collector comprises:
dispersing a negative-electrode active material, a conductive agent, the first organic binder A, the second organic binder B, and the inorganic binder C in a solvent to prepare a negative electrode slurry; and
applying the negative electrode slurry on the surface of the negative-electrode current collector, followed by drying, to form the initial negative-electrode film layer.

17. The preparation method according to claim 15 or 16, wherein temperature of the crosslinking reaction is ≥ 150°C, optionally 150°C-290°C, and further optionally 150°C-200°C.

18. The preparation method according to any one of claims 15 to 17, wherein the negative electrode slurry further comprises styrene-butadiene rubber.

19. A binder formula, comprising a first organic binder A, a second organic binder B, and an inorganic binder C, wherein the first organic binder A has more than two hydroxyl groups, the second organic binder B has more than two -C(O)R, R independently represents-OX or - NH₂, X independently represents hydrogen or alkali metal ion, and the inorganic binder C comprises one or more of silicate, borate, and phosphate.

20. The binder formula according to claim 19, further comprising styrene-butadiene rubber.
